# EUROPÄISCHE PATENTSCHRIFT

(11) **EP 0 735 068 B1**
(45) Veröffentlichungstag und Bekanntmachung des Hinweises auf die Patenterteilung: **15.12.1999**
(21) Anmeldenummer: 96104935.0
(22) Anmeldetag: 28.03.1996
(51) Int. Cl.: C08G 18/32

(54) **Thermoplastische Polyurethane sowie ihre Verwendung**
Thermoplastic polyurethanes and their use
Polyuréthanes thermoplastiques et leur utilisation

(30) Priorität: 01.04.1995 DE 19512310
(43) Veröffentlichungstag der Anmeldung: 02.10.1996
(73) Patentinhaber: Parker Hannifin GmbH, 33659 Bielefeld (DE)
(72) Erfinder: Möschel, Joachim, 71120 Grafenau, Baden-Württemberg (DE)
(74) Vertreter: Wolff, Michael, Dipl.-Phys.

(56) Entgegenhaltungen:
- EP-A- 0 390 537
- BE-A- 675 717
- DE-A- 4 308 100
- DE-A- 4 316 245
- FR-A- 2 577 934

## Beschreibung

Die Erfindung betrifft die Verwendung bestimmter Polyolkomponenten zur Herstellung von thermoplastischen Polyurethanen, die gegenüber polaren Agenzien, insbesondere gegenüber dem Angriff durch Säuren und Laugen, beständig sind, Weiterhin betrifft die Erfindung thermoplastische Formteile, die unter Verwendung der mit diesen Polyolkomponenten hergestellten Polyurethane erhältlich sind, wie beispielsweise Dichtungen, Schläuche und Membranen; sowie diese Polyurethane selber.

Elastomere und thermoplastische Polurethane sind allgemein bekannt, z. B. aus Kirk-Othmer, Encyclopedia of Chemical Technology, 2. Auflage, Verlag Interscience 1970, Band 21, S. 56 - 106 sowie aus der DE-OS 28 00 301 und der EP-A-0 135 111, aus denen auch die Verwendung von Polyurethanen als Dichtungsmittel bekannt ist. Die Herstellung der Polyurethane erfolgt im allgemeinen durch Umsetzung einer Polyisocyanatverbindung, insbesondere Diisocyanatverbindung, mit einer Polyolkomponente und einem Kettenverlängerer.

In der Praxis wird zur Herstellung von Polyurethanelastomeren im allgemeinen zunächst ein "Prepolymer" hergestellt, wobei ein Diisocyanat mit einem Polyol, üblicherweise einem Polyester oder Polyether mit endständigen Hydroxylgruppen unter Bildung eines Prepolymeren mit endstandigen Isocyanatgruppen umgesetzt wird. Die zur Herstellung der Polyurethan-Elastomeren eingesetzten Polyole besitzen im allgemeinen ein Molekulargewicht im Bereiche von ungefähr 1000 bis ungefähr 4000. Die verwendeten Diisocyanate sind im allgemeinen aromatische Verbindungen, wie insbesondere 4,4'-Diphenylmethandiisocyanat (MDI) und 3.3'-Dimethyl-4,4'-diphenyldiisocyanat (TODI). Eine Aufzählung von anderen geeigneten aromatischen Diisocyanaten zur Herstellung von Polyurethan-Elastomeren findet sich in Tabelle 16. S. 77 der zitierten Literaturstelle von Kirk-Othmer (a.a.O.). Während der Prepolymer-Herstellung erhöht sich das Molekulargewicht des Produktes.

Dieses Prepolymer wird dann weiter mit einer zweiten aktiven Wasserstoff enthaltenden Verbindung umgesetzt, üblicherweise mit niedrigerem Molekulargewicht als das zur Herstellung des Prepolymeren angewandte Polyol. Diese zweite Stufe wird als "Kettenverlängerungs"-Reaktion und die zweite aktiven Wasserstoff enthaltende Verbindung wird als "Kettenverlängerer" bezeichnet. Glykol(1,2-Ethandiol); 1,4-Butandiol, diamine und trihydroxyverbindungen wurden als Kettenverlängerer angewandt. Die Kettenverlängerungsreaktion führt dazu, daß sich die Segmente des Prepolymeren unter Bildung eines hochmolekularen linearen Produktes verbinden.

Erfolgt die Kettenverlängerungsreaktion in erster Linie unter Einsatz von difunktionellen Komponenten, so ist die Voraussetzung für den Erhalt von thermoplastischen Polyurethanen gegeben.

Die im vorstehenden erörterten Verfahrensstufen werden üblicherweise bei erhöhten Temperaturen, z. B. 100°C durchgeführt und können gegebenenfalls katalysiert werden.

Neben dem beschriebenen Preopolymerverfahren zur Herstellung von Polyurethan-Elastomeren kann auch ein einstufiges ("one-shot")-Verfahren angewandt werden, bei dem Verbindungen mit aktivem Wasserstoff unterschiedlicher Molekulargewichte vermischt und das entstehende Gemisch mit einem Polyisocyanat umgesetzt wird.

Innerhalb der Gruppe von Polyurethan-Elastomeren ist es möglich, einen weiten Bereich physikalischer und chemischer Eigenschaften des Elastomeren zu erreichen durch entsprechende Auswahl der speziellen Ausgangssubstanzen, ihrer Formulierung oder relativen Menge in der Masse usw..

Polyurethan-Elastomere haben aufgrund ihrer zweiphasigen Struktur spezielle Eigenschaften, die vernetzte Gummiwerkstoffe nicht besitzen, nämlich eine ausgezeichnete Abriebfestigkeit, hohe Reißfestigkeit, außerordentliche Zähigkeit, ein sehr gutes dynamisches Verhalten und eine ausgezeichnete Beständigkeit gegenüber der Einwirkung von Sauerstoff und Ozon. Aufgrund dieser Vorteile und aufgrund der Tatsache, daß sie für viele Anwendungen maßgeschneidert werden können, finden Polyurethan-Elastomere bevorzugt anwendung im Dichtungsbereich.

Nachteilig an Dichtungen aus üblichen Polyurethan-Elastomeren ist jedoch ihre relativ schlechte Beständigkeit gegenüber hydrolysierbaren Medien. Diese ist gleichzeitig ursächlich dafür verantwortlich, daß Polyurethan-Dichtungen nicht oder nur sehr eingeschränkt in wäßrigen Lösungen, wie Säuren und Laugen, anwendbar sind, weshalb Bedürfnisse in den Bereichen Sanitär, Abwasseraufbereitung, Lebensmittelverarbeitung und Chemie-lndustrie mit Polyurethanen üblicher Struktur nicht abgedeckt werden können. Für diesen Bereich wurden vielmehr andere elastomere Materialien, wie bestimmte fluorierte Polymere oder Ethylen-Propylen-Elastomere, also vernetzte Gummiwerkstoffe eingesetzt. Diese sind in der Regel teuer und haben außerdem den Nachteil, daß sie nicht rezyklisierbar sind und bei weitem nicht die hohe Verschleißfestigkeit von Polyurethanen haben.

Aufgabe der vorliegenden Erfindung ist daher die Bereitstellung von thermoplastischen Polyurethanen, die gegenüber polaren Agenzien und hydrolysierbaren Medien, wie wäßrigen Medien und insbesondere Säuren und Laugen beständig sind.

Der Erfindung liegt die Erkenntnis zugrunde, daß man zu thermoplastischen Polyurethanen mit den angegebenen Eigenschaften dadurch gelangt, daß man zur Herstellung der Polyurethane eine spezielle Polyolkomponente verwendet. Diese erfindungsgemäß zur Herstellung der Polyurethane verwendete Polyolkomponente, die gegebenenfalls im Gemisch mit klassischen, d. h. üblicherweise verwendeten Polyolen verwendet werden kann, besteht aus
(A) bifunktionellen Fettalkoholdimeren oder bifunktionellen Fettalkohololigomeren oder Mischungen hiervon und/oder
(B) Copolymeren aus den bifunktionellen Fettalkoholdimeren und/oder Fettalkohololigomeren mit Aufbaukomponenten, wie insbesondere ε-Caprolactan, Polycarbonaten, AdiPinsäuren und anderen polaren Fragmenten,
mit einem Molekulargewicht von 500 bis 4000 g/Mol.

Gegenstand der Erfindung ist daher die Verwendung einer Polyolkomponente, die
(A) bifunktionelle Fettalkoholdimere oder bifunktionelle Fettalkohololigomere oder Mischungen hiervon und/oder
(B) Copolymere aus den bifunktionellen Fettalkoholdimeren und/oder Fettalkohololigomeren mit ε-Caprolacton, Polycarbonaten, Adipinsäuren und anderen polaren Fragmenten,
und mit einem Molekulargewicht von 500 bis 4000 g/Mol
umfaßt zur Herstellung von thermoplastischen Polyurethanen, die gegenüber polaren Agenzien beständig sind.

Gemäß einer vorteilhaften Ausgestaltung der Erfindung weisen die bifunktionellen Fettalkoholdimeren, Fettalkohololigomeren und Copolymeren ein Molekulargewicht von 1000 bis 2000 g/Mol auf.

Gemäß einer weiteren vorteilhaften Ausgestaltung weist die Polyolkomponente keine oder praktisch keine ungesättigten Bindungen auf.

Als vorteilhaft hat es sich ferner erwiesen, wenn die Polyolkomponente ausschließlich endständige primäre Hydroxylgruppen aufweist. und wenn sie eine möglichst enge Molekulargewichtsverteilung hat.

Gemäß einer weiteren vorteilhaften Ausgestaltung der Erfindung liegen die bifunktionellen Fettalkoholdimeren, Fettalkohololigomeren und/oder Copolymeren hiervon im Gemisch mit klassischen Polycarbonaten, Polyethern und/oder Polyestern vor.

Die erfindungsgemäß zur Herstellung der thermoplastischen Polyurethane eingesetzten bifunktionellen Fettalkoholdimeren und Fettalkohololigomeren können nach einer Methode hergestellt werden, die näher beschrieben wird in der Zeitschrift Fat. Sci. Technol. 95, Nr. 3, 1993. Seiten 91 - 94. Von den dort beschriebenen fettchemischen Polyolen unterscheiden sich die erfindungsgemäß eingesetzten Fettalkoholdimeren und Fettalkohololigomeren jedoch durch das höhere Molekulargewicht von über 500 und die erforderliche Bifunktionalität. Die Herstellung von Fettalkoholdimeren und Fettalkohololigomeren, die sich für die Herstellung erfindungsgemäßer Polyurethane eignen, wird ferner beschrieben in der PCT-Anmeldung 4316245.2 vom 13.5.93 der Fa. Henkel, Düsseldorf.

Werden die erfindungsgemäß verwendeten bifunktionellen Fettalkoholdimeren und Fettalkohololigomeren im Gemisch mit klassischen Polyolen, Polycarbonaten, Polyethern und/oder Polyestern verwendet, so sollte deren Anteil an der Gesamtpolyolkomponente unter 50, vorzugsweise unter 30 und in besonders vorteilhafter Weise unter 10 Mol-% liegen.

Die Herstellung der erfindungsgemäßen thermoplastischen Polyurethane erfolgt nach üblichen bekannten Methoden ausgehend von der beschriebenen Polyolkomponente und üblichen bekannten difunktionellen Isocyanaten, wie sie z. B. aus den zitierten Literaturstellen bekannt sind, üblichen bekannten Kettenverlängerern (Vernetzern), d. h. insbesondere niederkettigen Diolen, die in der Regel difunktionell sind, teilweise im Gemisch mit trifunktionellen Anteilen, wie z. B. Ethandiol, 1,4-Butandiol, 1,6-Hexandiol, Hydrochinon-di-(β-hydroxyethyl)-ether und allen weiteren difunktionellen, kurzkettigen Diolen, gegebenenfalls mit geringfügigen trifunktionellen Anteilen wie z. B. Trimethylolpropan.

Das Isocyanat-Polyol-Äquivalentverhältnis liegt beispielsweise bei 1,1 bis 2,8.

Die Herstellung von erfindungsgemäßen, thermoplastisch verarbeitbaren Polyurethanelastomeren auf Basis lettchemischer Polyole mit den angegebenen Merkmalen kann somit nach folgendem Verfahren erfolgen:

Die erfindungsgemäß eingesetzte Polyolvorlage wird mindestens 1 Stunde bei 110°C/50 mbar evakuiert, um sie zu entfeuchten. Die entfeuchtete Polyolvorlage wird dann in einem geschlossenen Rührkessel auf Starttemperatur gebracht (100 - 140°C) und mit einer bestimmten Überschußäquivalentmenge von monomerem Diisocyanat versehen. Es beginnt die chemische Aufbaureaktion, während der kontinuierlich gerührt werden muß. Nach Überschreitung des exothermen Maximums ist das Prepolymer zur Weiterbehandlung fertig.

Mit dem erhaltenen Prepolymer, dem zuvor alle Hilfsmittel, wie Stabilisatoren, Antioxydantien, Füllstoffe, Trennwachse und Nukleierungsmittel, zugegeben wurden, wird eine Niederdruckgießmaschine beschickt. Dann wird ein üblicher Vernetzer mit dem Prepolymer vermischt.

Der Austrag dieses reaktiven Gemisches kann diskret auf Gießtische oder kontinuierlich auf mit z. B. Infrarotstrahler beheizte und abhasiv beschichtete Fließbander erfolgen.

Selbstverständlich kann aber auch - unter Verzicht auf die Prepolymersynthese - das One-Shot-Verfahren angewendet werden. In diesem Fall wird die Polyolkomponente mit Vernetzer vorgemischt und anschließend mittels einer Niederdruckgießmaschine zusammengeführt und ausgetragen, wobei wieder entweder diskret auf Gießtische oder kontinuierlich auf Förderbänder ausgetragen wird.

Nach ca. zwei Tagen Liegedauer können die geschnittenen Polyurethanplatten granuliert weden. Sie sind dann der thermoplastischen Verarbeitung zugänglich.

Nach dem beschriebenen Verfahren lassen sich thermoplastische Polyurethanelastomere in einem Härtebereich von 80 Shore A bis 95 Shore A mit gutem Wärmeformverhalten, mäßiger Rückprallelastizität, akzeptabler Kälteflexibilität, guter Verschleißfestigkeit und herausragender Resistenz gegenüber Säuren und Laugen und sonstigen polaren Medien, wie z. B. wäßrigen Lösungen, Polyethylenglykolen und alkoholischen Lösungen herstellen, welche zur Herstellung von Dichtungen, Schläuchen, Membranen, Steckern und Formkörpern Einsatz finden können.

### Beispiele

Die folgenden Beispiele sollen die Erfindung weiter veranschaulichen.

Nach dem beschriebenen Prepolymerverfahren wurden zwei erfindungsgemäße, thermoplastische Polyurethane V-PUR 463 und V-PUR 498 ausgehend von folgenden Komponenten hergestellt:

| | V-PUR 463 | V-PUR 498 |
|---|---|---|
| Oligomerfettalkohol (MG* 1100 g/mol) | 90 | - |
| " (MG 2000 g/mol) | - | 90 |
| Dimerfettalkohol (MG* 550 g/mol) | 10 | 10 |
| Diphenylmethan-4,4' diisocyanat (MDI) | 44.2 | 29,8 |
| Hydrochinon Di-(β-Hydroxyethyl) Ether | 12 | 9,0 |
| 1,1,1-Trimethylolpropan | 0.32 | 0,2 |
| Antioxydant (sterisch gehindertes Phenol) | 0.8 | 0,5 |
| Hoechst Wachs E (intemes Gleitmittel) | 0.5 | - |
| Füllstoff (Quarz/Kaolinit-Gemisch behandelt mit γ-Aminopropyltriethoxysilan) | 4 | 1,5 |

| | | |
|---|---|---|
| * MG =Mittleres Molekulargewicht in g/mol | | |

Angaben in Teilen pro Hundert.

Die erhaltenen thermoplastischen Polyurethane lassen sich nach üblichen Thermoplastverarbeitungsverfahren, wie z. B. Spritzguß oder Extrusion zu dichtungsrelevanten Formteilen verarbeiten.

Ihre mechanischen Eigenschaften lassen sich in vielerlei Hinsicht mit handelsüblichen TPU's, wie Desmopan oder Elastollan, vergleichen. Bezüglich der Beständigkeit in extremen Medien besteht ein signifikanter Unterschied. Nach 3monatiger Beaufschlagung mit Schwefelsäure (60%) bzw. Natronlauge (20%) bei Temperaturen von 60°C ergab sich kein meßbarer Festigkeitsabbau während konventionelle TPU's nach weniger Tagen völlig zersetzt waren.

Weitere Daten zur Synthese der erfindungsgemäßen Polyurethane finden sich in der folgenden Tabelle:

| **Bezeichnung** | **V-PUR 498** | **V-PUR 463** |
|---|---|---|
| Härte Shore A | ca. 82 | 92 |
| Prepolymer/Start (°C) | 138 | 135 |
| Reaktionsdauer (min.) | 12 | 12 |
| Vernetzungstemperatur (°C /1 min.) | 148 | 146 |
| Tischliegezeit | 15 min./120°C | 15 min./120°C |
| Äquivalente fettchem. Polyole | 7,6 | 10,9 |
| Äquivalente MDI | 14,3 | 20,2 |
| Äquivalent-Verhältnis MDI/Polyol | 1,88 | 1,85 |
| Äquivalent-Verhältnis Hartsegment/Weichsegment | 0,74 | 0,67 |
| Äquivalente Vernetzer | 5,66 | 7,3 |
| NCO-Index | 1,08 | 1,11 |
| Prozentuale Menge an mod. nachwachsenden Rohstoff | 70 % | 60 % |

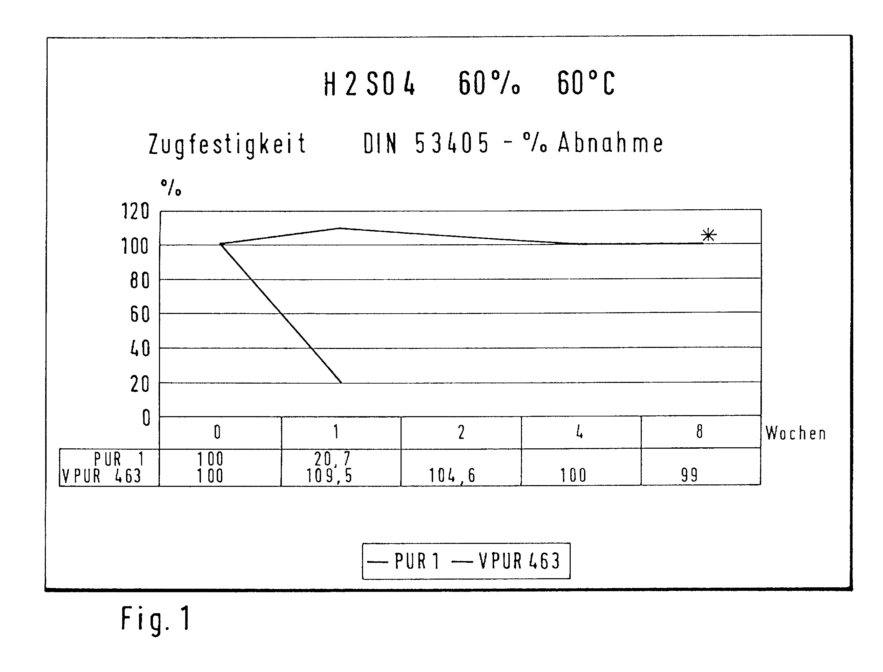

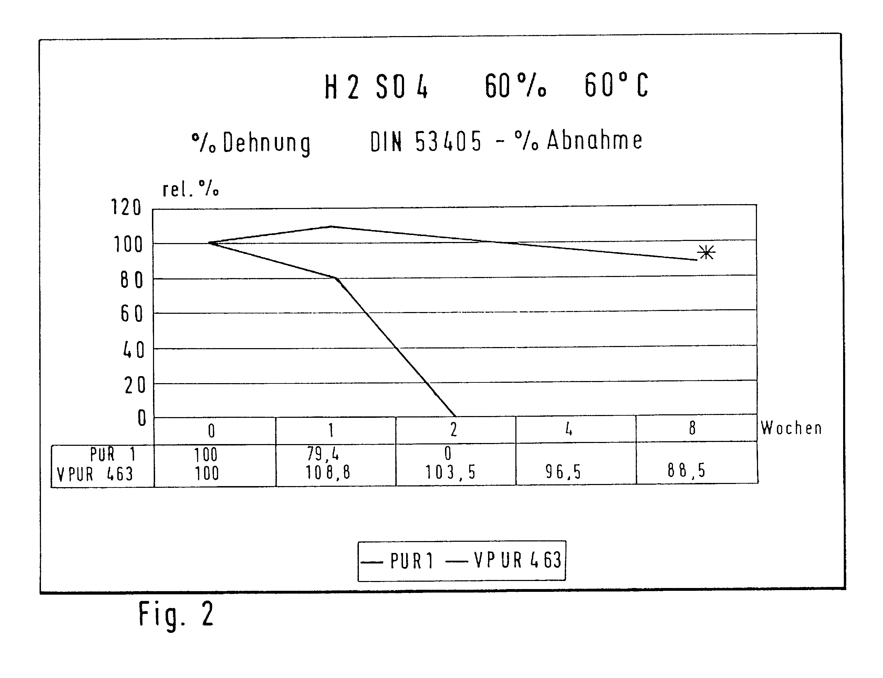

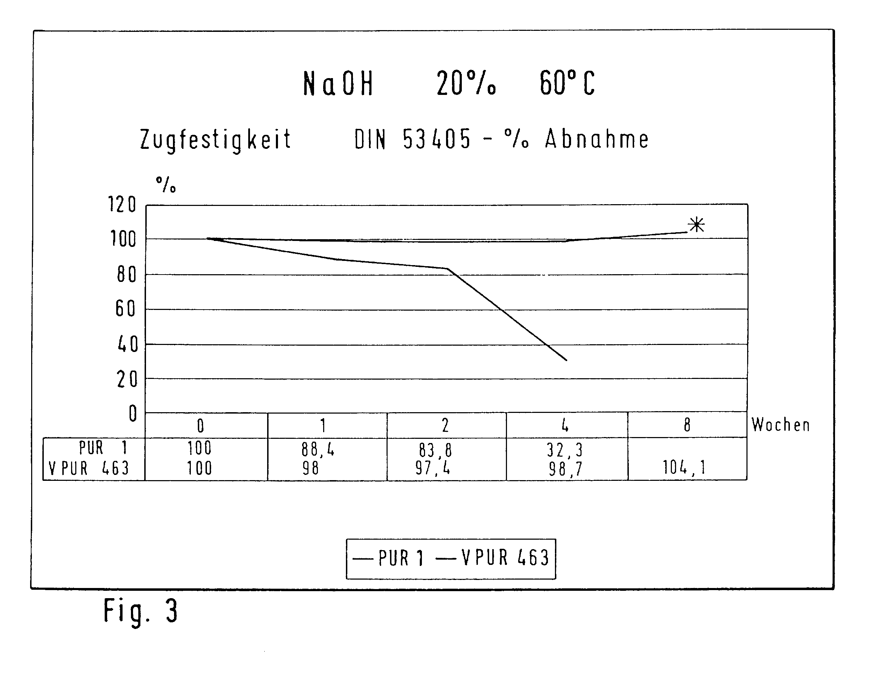

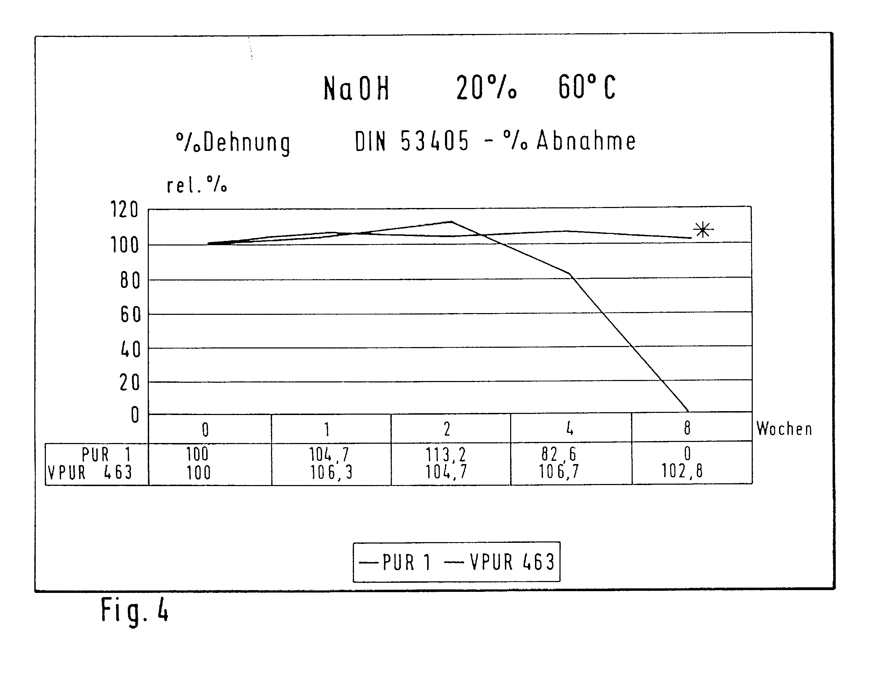

Die vorteilhafte Hydrolysebeständigkeit des erfindunsgemäßen thermoplastischen Polyurethans V-PUR 463 gegenüber einem handelsüblichen thermoplastischen Polyurethan PUR 1 ergibt sich aus den beigefügten Fig. 1 bis 4.

Ermittelt wurden die Zugfestigkeitsverluste und Dehnungsverluste der Polyurethane in 60%iger Schwefelsäure bei 60°C und 20%iger Natronlauge bei 60°C. Die Kurven des erfindungsgemäßen Polyurethans V PUR 463 sind mit einem "*" gekennzeichnet.

## Patentansprüche

1. Verwendung einer Polyolkomponente, die
(A) bifunktionelle Fettalkoholdimere oder bifunktionelle Fettalkohololigomere oder Mischungen hiervon und/oder
(B) Copolymere aus den bifunktionellen Fettalkoholdimeren und/oder Fettalkohololigomeren mit ε-Caprolacton, Polycarbonaten, Adipinsäuren und anderen polaren Fragmenten,
und mit einem Molekulargewicht von 500 bis 4000 g/Mol
umfaßt zur Herstellung von thermoplastischen Polyurethanen, die gegenüber polaren Agenzien beständig sind.

2. Verwendung nach Anspruch 1, dadurch gekennzeichnet, daß die bifunktionellen Fettalkoholdimere oder bifunktionellen Fettalkohololigomere und die Copolymeren daraus ein Molekulargewicht von 1000 bis 2000 g/Mol aufweisen.

3. Verwendung nach Anspruch 1 oder 2, dadurch gekennzeichnet, daß die Polyolkomponente keine oder praktisch keine ungesättigten Bindungen aufweist.

4. Verwendung nach einem der Ansprüche 1 bis 3, dadurch gekennzeichnet, daß die Polyolkomponente eine enge Molekulargewichtsverteilung aufweist.

5. Verwendung nach einem der Ansprüche 1 bis 4, dadurch gekennzeichnet, daß die bifunktionellen Fettalkoholdimeren, Fettalkohololigomeren und/oder Copolymeren hiervon im Gemisch mit klassischen Polycarbonaten, Polyethern und/oder Polyestern vorliegen.

6. Thermoplastische Formteile, die unter Verwendung der in den vorstehenden Ansprüchen definierten Polyolkomponente hergestellten, thermoplastischen Polyurethane erhältlich sind.

7. Formteil nach Anspruch 6, dadurch gekennzeichnet, daß es sich um Dichtungen, Schläuche oder Membranen handelt.

8. Thermoplastische Polyurethane, die unter Verwendung der in den Ansprüchen 1 bis 5 angegebenen Polyolkomponente gegebenenfalls im Gemisch mit klassischen Polyolen und durch Umsetzung mit einer Diisocyanatkomponente sowie einem weiteren kurzkettigen Kettenverlängerer erhältlich sind.

## Claims

1. Use of a polyol component, which comprises
(A) bifunctional fatty alcohol dimers or bifunctional fatty alcohol oligomers or mixtures thereof and/or
(B) copolymers of the bifunctional fatty alcohol dimers and/or fatty alcohol oligomers with ε-caprolactone, polycarbonates, adipic acids and other polar fragments,
and with a molecular weight of 500 to 4000 g/mol,
for the production of thermoplastic polyurethanes which are resistant to polar agents.

2. Use according to claim 1, characterised in that the bifunctional fatty alcohol dimers or bifunctional fatty alcohol oligomers and the copolymers thereof have a molecular weight of 1000 to 2000 g/mol.

3. Use according to claim 1 of claim 2, characterised in that the polyol components have no or virtually no unsaturated bonds.

4. Use according to one of claims 1 to 3, characterised in that the polyol components have a narrow molecular weight distribution.

5. Use according to one of claims 1 to 4, characterised in that the bifunctional fatty alcohol dimers, fatty alcohol oligomers and/or copolymers thereof are present in a mixture with classical polycarbonates, polyethers and/or polyesters.

6. Thermoplastic moulded parts which are obtained with use of the thermoplastic polyurethane produced with the polyol component defined in the preceding claims.

7. Moulded part according to claim 6, characterised in that it concerns seals, hoses or membranes.

8. Thermoplastic polyurethanes which are obtained with use of the polyol component, which is indicated in claims 1 to 5, optionally in mixture with classical polyols and by substitution by a diisocyanate component as well as a further short-chain chain extruder.

## Revendications

1. Utilisation d'un composant polyol qui comporte
(A) des alcools gras dimères bifonctionnels ou des alcools gras oligomères bifonctionnels ou des mélanges de ces derniers et/ou
(B) des copolymères des alcools gras dimères et/ou des alcools gras oligomères bifonctionnels avec de la ε-caprolactone, des polycarbonates, des acides adipiques et d'autres fragments polaires,
et avec un poids moléculaire de 500 à 4000 g/mol,
pour la préparation de polyuréthannes thermoplastiques résistants aux agents polaires.

2. Utilisation suivant la revendication 1, caractérisée en ce que les alcools gras dimères bifonctionnels ou les alcools gras oligomères bifonctionnels et les copolymères de ces derniers présentent un poids moléculaire de 1000 à 2000 g/mol.

3. Utilisation suivant l'une des revendications 1 et 2, caractérisée en ce que le composant polyol ne présente aucune ou pratiquement aucune liaison insaturée.

4. Utilisation suivant l'une des revendications 1 à 3, caractérisée en ce que le composant polyol présente une étroite répartition du poids moléculaire.

5. Utilisation suivant l'une des revendications 1 à 4, caractérisée en ce que les alcools gras dimères, les alcools gras oligomères bifonctionnels et/ou les copolymères de ces derniers sont en mélange avec des polycarbonates, des polyéthers et/ou polyesters classiques.

6. Pièces moulées thermoplastiques, qui peuvent être obtenues en utilisant les polyuréthannes thermoplastiques préparés avec le composant polyol défini dans les revendications précédentes.

7. Pièce moulée suivant la revendication 6, caractérisée en ce qu'il s'agit de joints d'étanchéité, de tuyaux flexibles ou de membranes.

8. Polyuréthannes thermoplastiques, qui peuvent être obtenus en utilisant le composant polyol indiqué dans les revendications 1 à 5, éventuellement en mélange avec des polyols classiques et par conversion avec un composant diisocyanate ainsi qu'avec un autre prolongateur de chaîne à chaîne courte.
